(19) Europäisches Patentamt
European Patent Office
Office européen des brevets

(11) **EP 1 607 245 B1**

(12) **FASCICULE DE BREVET EUROPEEN**

(45) Date de publication et mention de la délivrance du brevet:
**23.04.2008 Bulletin 2008/17**

(51) Int Cl.:
***B60C 23/04*** *(2006.01)*

(21) Numéro de dépôt: **05291288.8**

(22) Date de dépôt: **16.06.2005**

(54) **Procédé de détection de fuite rapide d'un pneu de véhicule automobile**

Verfahren zum Detektieren eines schnellen Luftverlustes eines Reifens

Method to detect a fast tyre air leak

(84) Etats contractants désignés:
**DE ES FR GB IT**

(30) Priorité: **18.06.2004 FR 0406631**

(43) Date de publication de la demande:
**21.12.2005 Bulletin 2005/51**

(73) Titulaire: **JOHNSON CONTROLS AUTOMOTIVE ELECTRONICS**
**95526 Cergy Pontoise Cédex (FR)**

(72) Inventeurs:
- **Verrier, Cyrille**
  **95300 Pontoise (FR)**
- **Leberon, Régis**
  **28300 Saint Aubin des Bois (FR)**

(74) Mandataire: **Bloch, Gérard et al**
**Cabinet Bloch & Associés**
**23bis, rue de Turin**
**75008 Paris (FR)**

(56) Documents cités:
**WO-A-96/15919**
**FR-A- 2 820 087**
**US-A- 5 900 809**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne un procédé de détection de fuite, notamment un procédé de détection de fuite rapide telle que survenant lors de la crevaison d'un pneumatique de roue de véhicule automobile.

La détection rapide des crevaisons revêt généralement un caractère critique, notamment sur autoroute.

Les procédés de détection peuvent être mis en oeuvre par des calculateurs d'habitacle ou plus spécifiquement dans des boîtiers SSPP (système de surveillance de la pression des pneus).

Un boîtier SSPP collecte les informations de pression P et de température T de gaz contenu dans un pneu grâce à des capteurs et à un émetteur radio, généralement solidaires de la jante de la roue. Un récepteur radio disposé dans le boîtier permet de recevoir périodiquement une trame de données représentatives de la pression et de la température.

La période d'acquisition des trames de données de mesures issues de chaque roue est, en principe, l'inverse de la fréquence théorique d'émission des trames par les émetteurs qui est déterminée par le calculateur d'habitacle en fonction d'un état de fonctionnement du véhicule (arrêt, roulage).

Pour détecter une fuite, on calcule son débit à partir de l'évolution de la pression, d'une trame à l'autre, à la fréquence théorique ci-dessus, c'est-à-dire que l'on calcule le débit à partir de l'écart de pression enregistré sur le temps théorique.

Cette détection n'est cependant pas optimale. En effet, d'une part, la température de la jante, donc du gaz contenu dans le pneumatique, peut varier de façon importante au cours de l'utilisation du véhicule, par exemple lors d'un coup de frein. Cela provoque une variation de la pression, donc une variation du débit calculé pouvant être interprétée à tort comme une fuite, entraînant des fausses alarmes.

On connaît par les demandes FR-A-2 820 087 et WO-A-96/15919 des dispositifs de détection de pression d'air de pneumatique avec une compensation thermique de la mesure de pression.

Cependant, la compensation thermique, même si elle est appliquée, n'est pas immédiatement répercutée, étant donné l'importance du temps de réponse d'un capteur de température, plus grande que celle d'un capteur de pression, auquel s'ajoute le temps entre au moins deux trames, temps qui n'est pas constant:

1) il peut être diminué volontairement, par exemple si la surveillance de la pression des pneumatiques demande à être accrue, auquel cas le débit calculé diminue avec le temps entre deux trames,

2) il peut augmenter involontairement en cas de perte de trame provoquée par une mauvaise liaison radio. Le débit calculé peut alors facilement doubler. Enfin, à cause de son caractère critique, une fuite rapide comme une crevaison doit être détectée le plus rapidement possible, ce qui exclut l'usage des techniques de filtrage, alors que la précision des capteurs utilisés l'y inciterait.

C'est pourquoi, on préfère généralement, comme dans le document EP-A-0786361, utiliser des procédés s'appuyant uniquement sur l'analyse différentielle des variations des pressions (ou des débits) de l'ensemble des pneus, ou au moins de celles des roues de chacun des trains du véhicule, ce qui présente l'avantage de s'affranchir de l'utilisation de capteurs de température, des pressions initiales des pneumatiques (au démarrage) et de l'utilisation de filtrages.

Mais les fausses alarmes, ci-dessus évoquées, restent alors possibles. La demanderesse a recherché une solution pour écarter au maximum ce risque de fausses alarmes.

A cet effet l'invention concerne un procédé de détection de fuite rapide du gaz contenu dans un pneu de véhicule automobile à partir des mesures périodiques de la pression et de la température dudit gaz, comportant les étapes suivantes :

- on calcule une pression de référence à partir d'une première mesure de pression initiale;
- on calcule une pression de seuil d'alerte à partir de ladite pression de référence,
- à chaque période d'acquisition des mesures, on calcule une pression compensée en température,
- on compare ladite pression compensée à la pression de seuil d'alerte, et la fuite rapide est détectée si la pression compensée est inférieure à la pression de seuil d'alerte.

Ainsi, on évite les inconvénients liés au filtrage sur plusieurs trames, aux sautes de pression dues aux variations de températures, aux variations de volume, à la sensibilité des capteurs, etc.

De préférence, la pression de référence est calculée à partir d'une première mesure à froid et est compensée en température.

Ainsi, on évite les inconvénients liés aux erreurs de détection dues aux variations de pression initiale.

De préférence encore, la pression de référence est mesurée soit après un temps déterminé, par exemple au moins une heure après le dernier arrêt, soit au démarrage du véhicule, et la pression de seuil d'alerte est déterminée en fonction d'un seuil de garde qui dépend de la précision des capteurs de mesure.

Eventuellement, la détection peut être infirmée lors du calcul d'une période d'acquisition suivante, de façon à supprimer l'effet éventuel de la constante de temps du capteur de température.

On notera qu'en exerçant la détection sur chaque roue, à chaque période d'acquisition des mesures de pression et de température, par comparaison d'une pression compensée en température avec un seuil d'alerte réactualisé à chaque démarrage, la demanderesse propose un procédé supprimant tous les inconvénients énoncés ci-dessus.

L'invention sera mieux comprise à l'aide de la description suivante du procédé selon l'invention, en référence au dessin annexé, sur lequel :

- les figures 1a, 1b, 1c, 1d sont des graphiques représentant les évolutions comparées des mesures de pression compensées ou non et de température en fonction du temps lors de l'utilisation du véhicule ;
- les figures 2a, 2b, 2c sont des graphiques représentant les évolutions comparées des mesures de pression compensées ou non, de température, et de vitesse linéaire de roulage en fonction du temps lors de l'utilisation du véhicule ;
- la figure 3 est un graphique représentant l'évolution de la pression compensée lors d'une fuite rapide, et la comparaison effectuée pour la détecter, conformément au procédé de l'invention.

Dans la suite du document, par pression Pc compensée en température, on entend la grandeur résultat du calcul :

$$Pc = Pa \times T_{20} / Ta , \qquad (1)$$

Ta étant la température absolue du gaz contenu dans le pneu correspondant à la pression Pa, pression ici désignée par pression absolue, c'est-à-dire non compensée en température. Ta et Pa sont mesurées périodiquement par le système SSPP du véhicule comme il a été dit plus haut.

Dans la formule (1), les températures et les pressions sont respectivement exprimées en Kelvin et en millibars, $T_{20}$ étant la température Kelvin de référence, par exemple à 20°Celsius. Sur les graphiques des figures, les températures sont néanmoins exprimées en degrés Celsius.

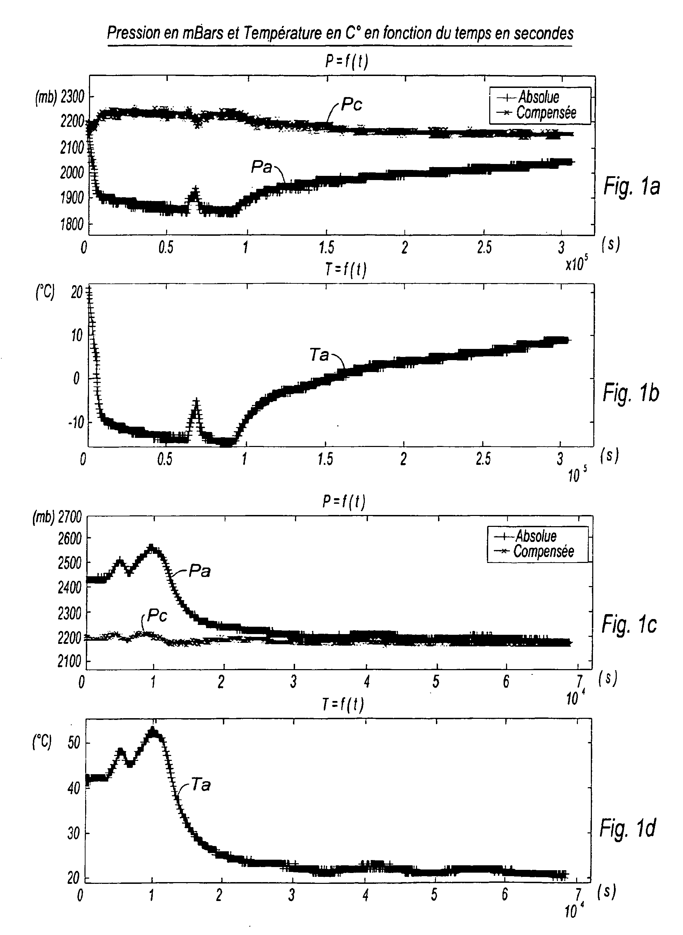

Les figures 1a et 1b montrent respectivement un exemple d'évolution temporelle de la pression absolue Pa et compensée Pc du gaz d'un pneu de roue du véhicule lorsqu'il est en cours d'utilisation, et l'évolution parallèle de sa température Ta. Ici les températures évoluent entre 20°C et - 15°C. On note la relative stabilité de Pc dont la variation est inférieure à 50 millibars. Au contraire Pa subit fortement l'influence de la température Ta.

Il en est de même pour un autre exemple des évolutions correspondantes de la température Ta et des pressions Pa et Pc sur les figures 1c et 1d. La température Ta évolue entre 20°C et 55°C pendant la durée de l'utilisation du véhicule. On comprend que l'établissement d'une surveillance sur la mesure directe de pression Pa, non compensée en température, est quasiment impossible.

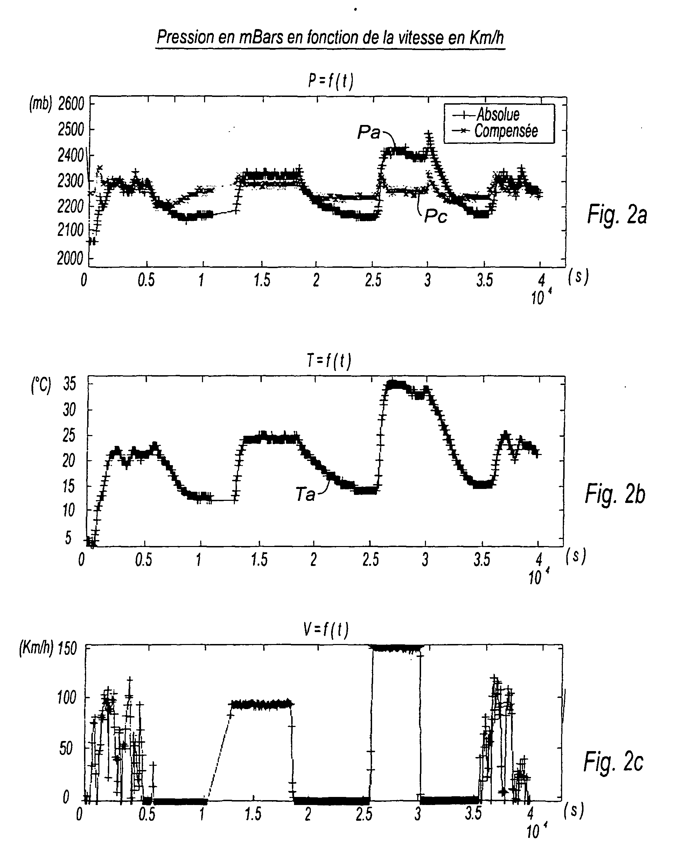

La figure 2a maintenant, montre un troisième exemple d'évolution temporelle de la pression absolue Pa et compensée Pc. La figure 2b montre l'évolution parallèle de la température Ta du gaz du pneu pour le même exemple. La figure 2c montre encore pour cet exemple, l'évolution parallèle de la vitesse du véhicule. Ici les températures évoluent entre 0°C et 35°C. On note combien Pa subit fortement l'influence de la vitesse du véhicule à travers la température Ta, et combien Pc reste plus stable.

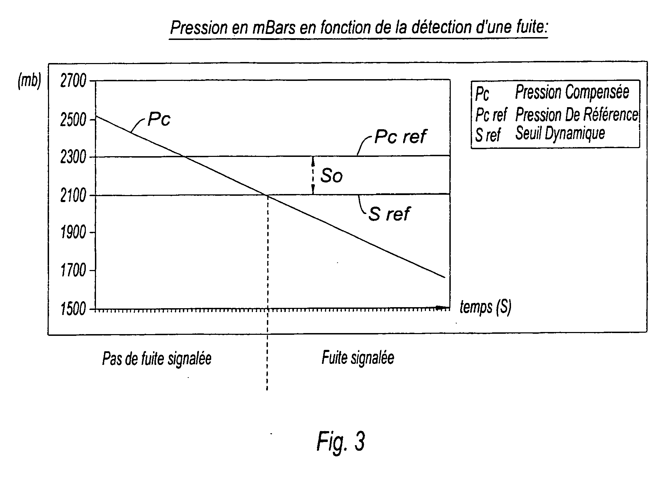

Grâce à ces propriétés remarquées, en référence à la figure 3, le procédé de détection de fuite rapide du pneu du véhicule consiste ici, à partir des mesures périodiques de la pression et de la température du gaz, à exécuter les étapes suivantes :

- on calcule une pression de référence $Pc_{ref}$ à partir d'une première mesure $Pa_{ref}$, à froid, par exemple au moins une heure après le dernier arrêt, ou au démarrage du véhicule, de la pression du pneumatique et de sa température correspondante $Ta_{ref}$ selon la formule (1),
- on calcule une pression de seuil d'alerte Sref à partir de ladite pression de référence Pcref, selon la formule suivante :

$$S_{ref} = Pc_{ref} - So, \qquad (2)$$

- So étant un seuil de garde constant, mais qui peut aussi être un paramètre calculé en fonction des éléments évoqués ci après,
- à chaque période d'acquisition, on calcule une pression Pc compensée en température, selon la formule (1),
- on compare ladite pression compensée Pc au seuil d'alerte Sref, et
- la fuite est détectée si la pression compensée Pc est inférieure à la pression de seuil d'alerte Sref.

Le seuil de garde So est calibré en fonction de la précision des capteurs de pression et de température utilisés, et aussi du temps de réponse de ce dernier capteur sur une période d'acquisition de mesures. Il faut prévoir un seuil So au moins supérieur à 5% de la pression nominale du pneumatique. 10%, soit environ 200 millibars dans l'exemple des figures, est une valeur qui convient bien. Avantageusement, on peut choisir une valeur entre 2 et 25%, et de préférence entre 10 et 15%.

Ainsi, on évite les inconvénients rapportés ci-dessus, et les erreurs de détection dues aux variations de pression initiale.

La détection peut éventuellement être infirmée lors du calcul d'une période d'acquisition suivante, de façon à supprimer l'effet résiduel de la constante de temps du capteur de température, mais le seuil So choisi garantit une sécurité de diagnostic statistiquement définie, ce qui écarte cette éventualité.

On notera qu'en exerçant la détection par comparaison de la valeur de la pression même, à chaque période d'acquisition, à un seuil d'alerte réactualisé à chaque démarrage, on supprime tous les inconvénients des méthodes de l'art antérieur consistant à calculer un débit.

## Revendications

1. Procédé de détection de fuite rapide du gaz contenu dans un pneu de véhicule automobile à partir des mesures périodiques de la pression Pa et de la température Ta dudit gaz, **caractérisé par le fait qu'**il comporte les étapes suivantes :

    - on calcule une pression de référence $Pc_{ref}$ à partir d'une mesure de pression initiale,
    - on calcule une pression de seuil d'alerte $S_{ref}$ à partir de ladite pression de référence $Pc_{ref}$,

    à chaque période d'acquisition des mesures, on calcule une pression Pc compensée en température,

    - on compare ladite pression compensée Pc à la pression de seuil d'alerte $S_{ref}$, la fuite étant détectée si la pression compensée Pc est inférieure à la pression de seuil d'alerte $S_{ref}$.

2. Procédé selon la revendication 1, dans lequel la pression de référence $Pc_{ref}$ est calculée à partir d'une première mesure $Pa_{ref}$ à froid et est compensée en température.

3. Procédé selon la revendication 2, dans lequel la pression de référence $Pa_{ref}$ est mesurée soit après un temps déterminé après le dernier arrêt soit au démarrage du véhicule.

4. Procédé selon l'une des revendications 1 à 3, dans lequel la pression compensée est calculée selon la formule Pc = Pa x T20 / Ta, T20 étant la température kelvin de référence.

5. Procédé selon l'une des revendications 1 à 4, dans lequel la pression de seuil d'alerte $S_{ref}$ est déterminée en fonction d'un seuil de garde So.

6. Procédé selon la revendication 5, dans lequel le seuil de garde So est compris entre 2 % et 25 % de la pression nominale des pneus, de préférence entre 10 et 15 %.

7. Procédé selon l'une des revendications 5 et 6 dans lequel la pression de seuil d'alerte est calculée selon la formule $S_{ref} = Pc_{ref} - So$.

## Claims

1. Method of detecting a motor vehicle tyre fast gas leak from periodic measurements of the pressure Pa and temperature Ta of the said gas, **characterized in that** it comprises the following stages:

    - a reference pressure $Pc_{ref}$ is calculated from an initial pressure measurement,
    - a warning level pressure $S_{ref}$ is calculated from the said reference pressure $Pc_{ref}$, in each measurement acquisition period, a temperature-compensated pressure Pc is calculated,
    - the said compensated pressure Pc is compared with the warning level pressure $S_{ref}$, the leak being detected if the compensated pressure Pc is lower than the warning level pressure $S_{ref}$.

2. Method according to claim 1, in which the reference pressure $Pc_{ref}$ is calculated from a first measurement $Pa_{ref}$ cold and is temperature-compensated.

3. Method according to claim 2, in which the reference pressure $Pa_{ref}$ is measured either after a predetermined time after the last stop or on starting the vehicle.

4. Method according to one of claims 1 to 3, in which the compensated pressure is calculated according to the formula Pc = Pa x T20/Ta, where T20 is the reference Kelvin temperature.

5. Method according to one of claims 1 to 4, in which the warning level pressure $S_{ref}$ is determined depending on a protection level So.

6. Method according to claim 5, in which the protection level So is included between 2% and 25% of the nominal pressure of the tyres, preferably between 10 and 15%.

7. Method according to claim 5 or 6, in which the warning level pressure is calculated according to the formula $S_{ref} = Pc_{ref} - So$.

## Patentansprüche

1. Verfahren zum schnellen Leckerfassen des Gases, das in einem Fahrzeugreifen enthalten ist, ausgehend von regelmäßigen Messungen des Drucks Pa und der Temperatur Ta des Gases, **dadurch gekennzeichnet, dass** es die folgenden Schritte aufweist:

    - Berechnen eines Referenzdrucks $Pc_{ref}$ ausgehend von einer anfänglichen Druckmessung,

- Berechnen eines Warnschwellendrucks $S_{ref}$ ausgehend von dem Referenzdruck $Pc_{ref}$,

wobei man bei jeder Erfassungsperiode der Messwerte einen temperaturkompensierten Druck Pc berechnet,

- Vergleichen des kompensierten Drucks Pc mit dem Warnschwellendruck $S_{ref}$, wobei das Leck erfasst wird, wenn der kompensierte Druck kleiner ist als der Warnschwellendruck $S_{ref}$.

**2.** Verfahren nach Anspruch 1, bei dem der Referenzdruck $Pc_{ref}$ ausgehend von einer ersten Messung $Pa_{ref}$ in kaltem Zustand gemessen und temperaturkompensiert wird.

**3.** Verfahren nach Anspruch 2, bei dem der Referenzdruck $Pa_{ref}$ entweder nach einer bestimmten Zeit nach dem letzten Stillstand oder beim Starten des Fahrzeugs gemessen wird.

**4.** Verfahren nach einem der Ansprüche 1 bis 3, bei dem der kompensierte Druck gemäß der Formel $Pc = Pa \times T20 / Ta$ berechnet wird, wobei T20 die Referenztemperatur in Kelvin ist.

**5.** Verfahren nach einem der Ansprüche 1 bis 4, bei dem der Warnschwellendruck $S_{ref}$ in Abhängigkeit von einem Abstandsschwellenwert So bestimmt wird.

**6.** Verfahren nach Anspruch 5, bei dem der Abstandsschwellenwert So zwischen 2 % und 25 % des Nenndrucks des Werts der Reifen, vorzugsweise zwischen 10 und 15 % beträgt.

**7.** Verfahren nach einem der Ansprüche 5 und 6, bei dem der Warnschwellenwert gemäß der Formel $S_{ref} = Pc_{ref} - So$ berechnet wird.

Pression en mBars et Température en C° en fonction du temps en secondes
P=f(t)
(mb) 2300
2200
2100
2000
1900
1800
Absolue
Compensée
Pc
Pa
0
0.5
1
1.5
2
2.5
3
x10^5
(s)
Fig. 1a
T=f(t)
(°C) 20
10
0
-10
Ta
10^5
(s)
Fig. 1b
P=f(t)
(mb) 2700
2600
2500
2400
2300
2200
2100
Absolue
Compensée
Pa
Pc
0
1
2
3
4
5
6
7
10^4
(s)
Fig. 1c
T=f(t)
(°C) 50
40
30
20
Ta
10^4
(s)
Fig. 1d

*Pression en mBars en fonction de la vitesse en Km/h*

P=f(t)
(mb)
2600
2500
2400
2300
2200
2100
2000
0
0.5
1
1.5
2
2.5
3
3.5
4
10⁴
(s)
Absolue
Compensée
Pa
Pc

Fig. 2a

T=f(t)
(°C)
35
30
25
20
15
10
5
0
0.5
1
1.5
2
2.5
3
3.5
4
10⁴
(s)
Ta

Fig. 2b

V=f(t)
(Km/h)
150
100
50
0
0
0.5
1
1.5
2
2.5
3
3.5
4
10⁴
(s)

Fig. 2c

Pression en mBars en fonction de la détection d'une fuite:

(mb)
2700
2500
2300
2100
1900
1700
1500
Pc
Pc ref
So
S ref
temps (S)
Pc Pression Compensée
Pc ref Pression De Référence
S ref Seuil Dynamique
Pas de fuite signalée
Fuite signalée

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2820087 A
- WO 9615919 A
- EP 0786361 A